# EUROPÄISCHE PATENTSCHRIFT

(11) **EP 2 864 182 B1**
(45) Veröffentlichungstag und Bekanntmachung des Hinweises auf die Patenterteilung: **11.01.2017**
(21) Anmeldenummer: 13737807.1
(22) Anmeldetag: 20.06.2013
(51) Int. Cl.: B62D 5/00, B62D 1/10, B62D 3/04

(54) **ÜBERLAGERUNGSANTRIEB FÜR EINE ÜBERLAGERUNGSLENKUNG EINES KRAFTFAHRZEUGS**
SUPERPOSITION DRIVE FOR A SUPERPOSITION STEERING OF A VEHICLE
ENTRAÎNEMENT À SUPERPOSITION POUR UNE DIRECTION À SUPERPOSITION D'UN VEHICULE MOTEUR

(30) Priorität: 22.06.2012 DE 102012210640
(43) Veröffentlichungstag der Anmeldung: 29.04.2015
(73) Patentinhaber: Takata AG, 63743 Aschaffenburg (DE)
(72) Erfinder: MAROTZKE, Thomas, 16562 Bergfelde (DE)
(74) Vertreter: Maikowski & Ninnemann Patentanwälte Partnerschaft mbB
(86) Internationale Anmeldenummer: PCT/EP2013/062893
(87) Internationale Veröffentlichungsnummer: WO 2013/190045

(56) Entgegenhaltungen:
- EP-A1- 1 873 041
- WO-A1-99/65758
- WO-A1-2010/115707

## Beschreibung

Die Erfindung betrifft einen Überlagerungsantrieb für eine Überlagerungslenkung eines Kraftfahrzeuges gemäß dem Oberbegriff des Anspruchs 1.

Aus dem Stand der Technik sind Lenkräder, die eine Überlagerungslenkung realisieren, bekannt. Derartige Lenkräder weisen einen Überlagerungsantrieb zum Erzeugen eines Lenkwinkels auf, der mit einem vom Fahrer durch Betätigung des Lenkradkranzes des Lenkrades erzeugten Lenkwinkel überlagert wird, so dass sich eine Drehbewegung einer mit dem Lenkrad verbundenen Lenkwelle aus dem fahrerseitig erzeugten Lenkwinkel und dem durch den Überlagerungsantrieb erzeugten Lenkwinkel zusammensetzt.

Herstellungsbedingt weisen die Teile der Überlagerungslenkung bestimmte Toleranzen auf, deren Minimierung mit erheblichen Kosten verbunden ist. Bei der Montage der Einzelteile summieren sich diese Toleranzen, was Abweichungen beim Eingriff von Getriebekomponenten des Überlagerungsantriebes zu Folge hat. Das Zusammenwirken der Getriebekomponenten kann sich auch während des Betriebes der Überlagerungslenkung insbesondere in Abhängigkeit der auf den Überlagerungsantrieb wirkenden Betriebs- und Umgebungsbedingungen (z.B. Drehrichtung und deren Umkehr, Verschleiß, Temperatur, Luftfeuchtigkeit) verändern. Eine Veränderung des Zusammenwirkens der Getriebekomponenten kann wiederum eine durch den Überlagerungsantrieb verursachte Geräuschentwicklung beeinflussen. Besonders kritisch kann dieser Umstand sein, wenn die Überlagerungslenkung im unmittelbaren Hörbereich einer Person eingesetzt werden soll, wie es bei der Anwendung im Lenkrad eines Kraftfahrzeuges der Fall ist.

Aus der DE 10 2006 013 288 A1 ist eine Überlagerungsvorrichtung für eine Überlagerungslenkung mit einer Stelleinrichtung (Elektromotor) bekannt, welche zusammen mit einer mit ihr drehfest verbundenen Schneckenwelle schwenkbar an einem Getriebegehäuse gelagert ist. Durch eine an dem der Stelleinrichtung abgewandten Ende der Schneckenwelle angreifende Vorspanneinrichtung mit einer unter Zugspannung stehenden Schraubenfeder wird die Schneckenwelle gegen ein Schneckenrad gezogen und auf diese Weise das Spiel zwischen deren Zahnflanken auf null gebracht.

Nachteil einer derartigen Anordnung kann sein, dass beim Auftreten einer Kraft, welche entgegen der von der Vorspanneinrichtung aufgebrachten Kraft wirkt und diese übersteigt, Schneckenrad und Schneckenwelle auseinandergedrückt (voneinander wegbewegt) werden können und das Spiel zwischen den Zahnflanken ein kritisches Maß übersteigen kann.

Des Weiteren ist aus der WO 99/65758 A1 und der EP 1 873 041 A1 jeweils ein Überlagerungsantrieb für eine Überlagerungslenkung eines Kraftfahrzeuges nach dem Oberbegriff des Anspruchs 1 bekannt.

Das der Erfindung zugrunde liegende Problem besteht darin, einen Überlagerungsantrieb für eine Überlagerungslenkung eines Kraftfahrzeugs bereitzustellen, der einen Toleranzausgleich ermöglicht und die gleichzeitig möglichst sicher und zuverlässig arbeitet.

Dieses Problem wird durch den Überlagerungsantrieb mit den Merkmalen des Anspruchs 1 gelöst. Weiterbildungen der Erfindung sind in den abhängigen Ansprüchen angegeben.

Danach wird ein Überlagerungsantrieb für eine Überlagerungslenkung eines Kraftfahrzeugs bereitgestellt, mit
- einer Antriebswelle;
- einem mit der Antriebswelle zusammenwirkenden Antriebsrad, wobei
- die Antriebswelle gegenüber dem Antriebsrad schwenkbar gelagert ist,
wobei ein gegenüber dem Antriebsrad schwenkbar gelagertes Hebelelement vorgesehen ist, das so beschaffen und angeordnet ist, dass ein Verschwenken des Hebelelementes ein Verschwenken der Antriebswelle nach sich zieht oder umgekehrt ein Verschwenken der Antriebswelle ein Verschwenken des Hebelelementes.

Die Antriebswelle ist insbesondere in Form einer Antriebsschnecke ausgebildet, die mit einem als Schneckenrad ausgestalteten Antriebsrad kämmt. Erfindungsgemäß wird die Antriebswelle von einem Aktuator angetrieben, wobei der Aktuator und die Antriebswelle eine Anordnung bilden, die zusammen gegenüber dem Antriebsrad um eine gemeinsame Schwenkachse schwenkbar gelagert ist. Möglich ist insbesondere, dass der Aktuator (dessen Aktuatorwelle) mit der Antriebswelle verbunden ist (bzw. Aktuatorwelle und Antriebswelle einstückig ausgeführt sind), so dass eine Schwenkbewegung des Aktuators eine Schwenkbewegung der Antriebswelle bewirkt.

Beispielsweise ist die Antriebswelle an einem Gehäuse des Überlagerungsantriebes schwenkbar gelagert. Die Antriebswelle kann auch mittelbar schwenkbar an dem Gehäuse des Überlagerungsantriebes gelagert sein, insbesondere dadurch, dass der mit ihr verbundene Aktuator schwenkbar an dem Gehäuse des Überlagerungsantriebes angeordnet ist.

Gemäß einer weiteren Ausgestaltung der Erfindung ist die Antriebswelle gegenüber dem Antriebsrad um eine Schwenkachse schwenkbar gelagert, die zumindest näherungsweise parallel zur Rotationsachse des Antriebsrades und/oder senkrecht zur Achse der Antriebswelle verläuft.

Die schwenkbare Lagerung der Antriebswelle erfolgt über das gegenüber dem Antriebsrad schwenkbar gelagerte (insbesondere längliche) Hebelelement. Das Hebelelement ist so beschaffen und angeordnet, dass ein Verschwenken des Hebelelementes ein Verschwenken der Antriebswelle oder umgekehrt nach sich zieht (insbesondere ist das Hebelelement gegenüber der Antriebswelle festgelegt). Beispielsweise ist das Hebelelement schwenkbar an dem Gehäuse des Überlagerungsantriebs gelagert, wie weiter unten erläutert werden wird.

Das Hebelelement kann darüber hinaus mit dem Aktuator zum Antreiben der Antriebswelle fest verbunden oder als Teil des Aktuators ausgebildet sein. Insbesondere ist das Hebelelement mit einem Gehäuse des Aktuators (z.B. einstückig) verbunden. Das Hebelelement ist beispielsweise so angeordnet und beschaffen, dass es einen ersten um einen Schwenkpunkt (oder um eine Schwenkachse) schwenkbaren Hebelarm bildet, wobei sich ein zweiter Hebelarm von dem Schwenkpunkt bis zu einem Ort, an dem die Antriebswelle (z.B. in Form einer Antriebsschnecke) in das Antriebsrad (z.B. in Form einer Schneckenrad) eingreift, erstreckt. Die Schwenkachse verläuft insbesondere durch den Aktuator (insbesondere durch dessen Gehäuse) hindurch oder befindet sich, entlang der Drehachse der Antriebswelle betrachtet, zwischen dem Aktuator und dem Antriebsrad (bzw. dem Ort des Eingriffs von Antriebswelle und Antriebsrad).

Der erfindungsgemäße Überlagerungsantrieb weist somit einen zweiseitigen Hebel auf. In Abhängigkeit vom Abstand zwischen der Schwenkachse des Hebelelementes und dem Ort des Eingriffs zwischen der Antriebsschnecke und dem Schneckenrad sind auch Teile des Aktuators dem zweiten Hebelarm zuzurechnen.

Nach einer anderen Weiterbildung der Erfindung stützt sich das Hebelelement über mindestens ein elastisches Element an einem Gehäuse des Überlagerungsantriebes oder an einem an dem Gehäuse des Überlagerungsantriebes festgelegten Bauteil ab. Bei dem an dem Gehäuse des Überlagerungsantriebes festgelegten Bauteil handelt es sich somit um eine lenkradfeste, relativ zum dem Gehäuse des Überlagerungsantriebes nicht bewegbare Komponente. Das elastische Element ist insbesondere in Form einer Feder ausgebildet, z.B. nach Art einer Schrauben-, Elastomer- oder Tellerfeder. Für das elastische Element kann jedes Material verwendet werden, welches sich bei Belastung umkehrbar verformt und bei Wegfall der Belastung in seine Ursprungsform zurückkehrt.

In Abhängigkeit von der Auslegung des elastischen Elementes sowie der geometrischen Bedingungen in seinem Anordnungsbereich (insbesondere abhängig von dem Abstand zwischen dem Hebelelement und dem Gehäuse des Überlagerungsantriebes bzw. zu dem an dem Gehäuse des Überlagerungsantriebes festgelegten Bauteil) kann von dem elastischen Element eine definierte Kraft in das Hebelelement eingeleitet werden, welche bezüglich der Schwenkachse ein Drehmoment erzeugt, das auf den Aktuator und damit auf die Antriebswelle wirkt und das (über den zweiten Hebelarm) die Antriebswelle mit einer (insbesondere vorbestimmbaren) Anpresskraft gegen das Antriebsrad drückt.

Denkbar ist auch, dass ein erstes und ein zweites elastisches Element vorgesehen sind, wobei das erste elastische Element zwischen einer ersten Seite des Hebelelementes und dem Gehäuse des Überlagerungsantriebes oder dem an dem Gehäuse festgelegten Bauteil angeordnet ist, und sich das zweite Element auf einer zweiten Seite des Hebelelementes, die seiner ersten Seite abgewandt ist, befindet. Das erste und das zweite elastische Element, die jeweils wie oben erwähnt z.B. jeweils in Form einer Feder ausgestaltet sein können, müssen allerdings nicht identisch gestaltet sein. Denkbar ist vielmehr, dass sie sich etwa hinsichtlich der Art oder zumindest hinsichtlich ihrer Elastizitätskennlinie (insbesondere hinsichtlich ihrer Federkonstanten) unterscheiden.

Beispielsweise ist das Hebelelement in einer Ausgangsstellung von dem Gehäuse des Überlagerungsantriebes oder dem an dem Gehäuse festgelegten Bauteil beabstandet angeordnet, wobei das Gehäuse des Überlagerungsantriebes oder das mit dem Gehäuse verbundene Bauteil insbesondere eine Schwenkbewegung des Hebelelementes begrenzt. Auf diese Weise können am Ort des Eingriffs der Antriebswelle in das Antriebsrad sowohl in als auch gegen den Uhrzeigersinn über den zweiten Hebelarm (d.h. insbesondere über die Antriebswelle) in das Antriebsrad eingeleitete Kräfte ausgeglichen und (falls vorhanden) durch das oben erwähnte elastische Element (oder die mehreren elastischen Elemente) kompensiert werden. Die in das Antriebsrad eingeleiteten Kräfte variieren während des Betriebes des Überlagerungsantriebes etwa durch sich in Abhängigkeit von den vorhandenen Betriebs- und Umgebungsbedingungen (Antriebskräfte, Verschleiß, Temperatur, Luftfeuchtigkeit u.a.) verändernde Abmessungen und Eingriffsverhältnisse (z.B. Abstand und/oder Winkel zwischen Antriebswelle und Antriebsrad).

Das Hebelelement kann über einen Stift schwenkbar an einem Gehäuse des Überlagerungsantriebes gelagert sein, wobei der Stift insbesondere Durchgangsbohrungen in dem Gehäuse und in dem Hebelelement durchgreift.

Der Stift ist z.B. in Form eines Exzenterstiftes ausgebildet, der mit einem ersten Abschnitt das Hebelelement und mit einem zweiten Abschnitt das Gehäuse des Überlagerungsantriebes durchgreift, wobei eine Mittelachse des ersten Abschnitts die Schwenkachse und eine Mittelachse des zweiten Abschnitts eine Lagerachse definieren, und wobei die Schwenkachse in einem Abstand zu der Lagerachse verläuft. Insbesondere weist der erste Abschnitt des Exzenterstiftes einen größeren Durchmesser auf als der zweite Abschnitt.

Bei einer Drehung des Exzenterstiftes um die Lagerachse bewegt sich die Schwenkachse somit auf einer Kreisbahn um Lagerachse. Der Exzenterstift kann daher dazu dienen, den Abstand zwischen der Antriebswelle und dem Antriebsrad, d.h. den Eingriff (die Eingriffsverhältnisse) zwischen Antriebswelle und Antriebsrad, voreinzustellen. Darüber hinaus kann eine Arretieranordnung vorhanden sein, über die der Exzenterstift in einer gewünschten, voreinstellbaren Winkelstellung im Gehäuse des Überlagerungsantriebes arretierbar ist.

Die Erfindung betrifft auch eine Überlagerungslenkung, die einen wie oben beschriebenen Überlagerungsantrieb aufweist.

Die Erfindung wird im Folgenden anhand von Ausführungsbeispielen unter Bezugnahme auf die Figuren näher erläutert. Es zeigen:
- Fig. 1: ein in einem Lenkrad eines Kraftfahrzeuges angeordneter Überlagerungsantrieb gemäß einem Ausführungsbeispiel der Erfindung;
- Fig. 2: einen vergrößerten Ausschnitt der Fig. 1; und
- Fig. 3: einen Schnitt durch den Überlagerungsantrieb entlang der Ebene III-III in Fig. 2.

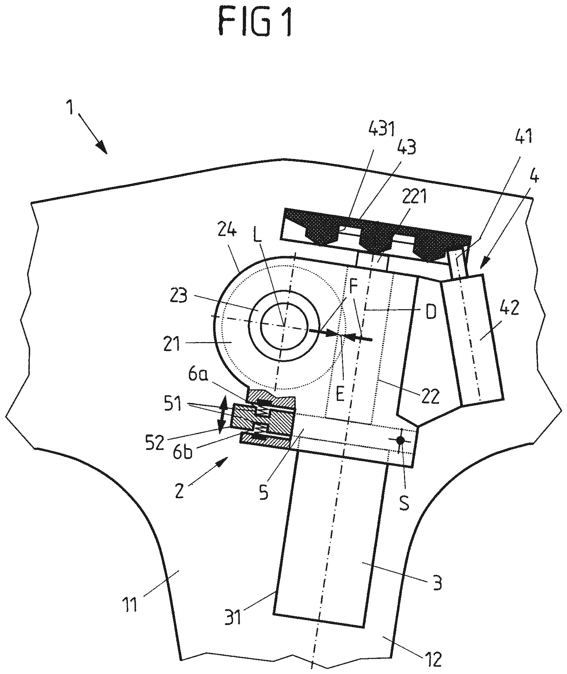

Figur 1 zeigt einen an einer zentralen Nabe 11 eines Lenkrades 1 eines Kraftfahrzeuges angeordneten Überlagerungsantrieb 2 zur Realisierung einer Überlagerungslenkung. Die Lenkradnabe 11 ist über Speichen 12 (vorliegend drei) mit einem nicht dargestellten Lenkradkranz verbunden, über den ein Fahrer das Lenkrad 1 drehen und somit einer mit dem Lenkrad 1 verbundenen Lenkwelle (mit Achse L) einen Lenkwinkel aufprägen kann. Mittels des Überlagerungsantriebes 2 kann der Lenkwelle ein zusätzlicher Lenkwinkel aufgeprägt werden, der dem durch Drehen des Lenkradkranzes in die Lenkwelle eingeleiteten Lenkwinkel überlagert wird.

Der Überlagerungsantrieb 2 ist insbesondere an einer dem Fahrer abgewandten Seite des Lenkrades 1 angeordnet und weist eine mit einem Antriebsrad in Form eines Schneckenrades 21 kämmende (im Eingriff stehende) als Antriebsschnecke 22 ausgebildete Antriebswelle auf. Das Schneckenrad 21 ist über einen Fortsatz 23, der aus einem Gehäuse 24 des Überlagerungsantriebes 2 herausragt, mit der Lenkwelle des Kraftfahrzeugs gekoppelt, so dass eine Drehbewegung des Schneckenrades 21 auf die Lenkwelle übertragen wird.

Die gemeinsame Drehachse L von Schneckenrad und Lenkwelle verläuft in der Fig. 1 senkrecht zur Zeichnungsebene. Der Antrieb der Antriebsschnecke 22 erfolgt über einen Aktuator 3, der insbesondere in Form eines Elektromotors ausgebildet ist. Eine Aktuatorwelle (nicht dargestellt) des Aktuators 3 ist fest (z.B. einstückig) mit der Antriebsschnecke 22 verbunden. Eine mögliche Ausgestaltung des Überlagerungsantriebes 2 sowie dessen Befestigung am Lenkrad 1 und mit der Lenkwelle sind z. B. in der WO 2010/11 57 07 A1 beschrieben, auf die insofern ausdrücklich Bezug genommen wird.

Am Lenkrad 1 ist des Weiteren eine zu dem Überlagerungsantrieb 2 separate Arretierungseinrichtung 4 angeordnet, die dazu dient, den Überlagerungsantrieb 2 durch mechanische Einwirkung zu arretieren; beispielsweise, um bei einer Fehlfunktion des Überlagerungsantriebes 2 ein Einleiten eines Lenkwinkels in die Lenkwelle durch den Überlagerungsantrieb 2 zu verhindern.

Die Arretierungseinrichtung 4 weist ein Arretierelement in Form eines Arretierbolzens 41 auf, der über einen (z. B. elektromagnetischen) Aktuator 42 axial aus einer Freigabeposition in die in Figur 1 dargestellte Arretierposition bewegbar ist. Der Arretierbolzen 41 wirkt in seiner Arretierposition mit einem rotierbaren Element in Form einer Arretierscheibe 43 zusammen, wobei die Arretierscheibe 43 drehfest mit einem aus dem Gehäuse 24 des Überlagerungsantriebes 2 herausragenden freien Ende 221 der Antriebsschnecke 22 gekoppelt ist. Entlang ihres äußeren Umfanges weist die Arretierscheibe 43 Aussparungen 431 auf, in die ein freies Ende des .Arretierbolzens 41 eingreift und die Arretierscheibe 43 vorwiegend formschlüssig verriegelt, so dass auch die mit der Arretierscheibe 43 gekoppelte Antriebsschnecke 22 blockiert ist.

Der Aktuator 3 des Überlagerungsantriebes 2 ist gemeinsam mit der Antriebsschnecke 22 um eine Achse S schwenkbar (pendelnd) am Gehäuse 24 des Überlagerungsantriebes 2 gelagert. Entsprechend kann die Antriebsschnecke 22 eine Schwenkbewegung relativ zu dem Schneckenrad 21 ausführen. Die Schwenkachse S verläuft, entlang der gemeinsamen Drehachse D von Antriebsschnecke 22 und Aktuatorwelle betrachtet, vorzugsweise zwischen der Antriebsschnecke 22 und dem Aktuator 3; insbesondere im Bereich eines der Antriebsschnecke 22 zugewandten Endes des Aktuators 3, wobei sich die Schwenkachse S durch einen Abschnitt des Gehäuses 24 des Überlagerungsantriebes 2 hindurch erstreckt.

Die schwenkbare Lagerung des Aktuators 3 und der Antriebsschnecke 22 ist realisiert durch ein gegenüber der Antriebsschnecke 22 zumindest im Wesentlichen festgelegtes, d.h. relativ zu der Antriebsschecke 22 zumindest im Wesentlichen nicht bewegbares, um die Schwenkachse S schwenkbares Hebelelement 5. Die Schwenkachse S verläuft im Bereich eines Endes des länglichen Hebelelements 5 durch dieses hindurch. Das Hebelelement 5 ist mit dem Aktuator 3 fest verbunden. Alternativ kann es auch als Teil des Aktuators 3, insbesondere als Teil eines Gehäuses 31 des Aktuators 3, ausgebildet sein.

Das Hebelelement 5 bildet einen ersten Hebelarm, wobei sich ein zweiter Hebelarm von der Schwenkachse S bis zu einem Ort E, an dem die Antriebsschnecke 22 in das Schneckenrad 21 eingreift, erstreckt. Die schwenkbare Lagerung des Aktuators 3 und der Antriebsschnecke 22 umfasst somit die Ausbildung eines zweiseitigen Hebels mit dem Hebelelement 5 als erstem Hebelarm und dem zweiten Hebelarm, der sich im Wesentlichen zwischen dem Aktuator 3 und dem Ort E des Eingriffs der Antriebsschnecke 22 in das Schneckenrad 21 (und zumindest im Wesentlichen entlang der Antriebsschnecke 22) erstreckt. In Abhängigkeit vom Abstand der Schwenkachse S vom Ort E des Eingriffs zwischen Antriebsschnecke 22 und Schneckenrad 21 können auch Teile des Aktuators 3 dem zweiten Hebelarm zuzurechnen sein.

Das Hebelelement 5 stützt sich über zwei elastische Elemente in Form zweier Federelemente 6a, 6b an dem Gehäuse 24 des Überlagerungsantriebes 2 ab. Denkbar ist auch, dass sich das Hebelelement 5 über die Federelemente 6a, 6b an einem mit dem Gehäuse 24 fest verbundenen Bauteil abstützt, d.h. die Federelemente 6a, 6b sich zwischen dem Hebelelement 5 und dem Bauteil befinden. Die Federelemente 6a, 6b sind zudem auf unterschiedlichen Seiten eines freien Endes 52 des Hebelelementes 5 angeordnet. Insbesondere bildet das Hebelelement 5 zwei Aussparungen 51 aus, in denen die Federelemente 6a, 6b aufgenommen sind.

Abhängig von der Auslegung der Federelemente 6a, 6b sowie von den geometrischen Bedingungen in deren Anordnungsbereich (d.h. insbesondere abhängig von den Abmessungen der Aussparungen 51 sowie des Abstandes des freien Endes 52 des Hebelelementes 5 von dem Gehäuse 24) wird von den Federelementen 6a, 6b eine definierte Kraft in das Hebelelement 5 eingeleitet, welche bezüglich der Schwenkachse S ein Drehmoment auf den Aktuator 3 und damit auch auf die Antriebsschnecke 22 entgegen dem Uhrzeigersinn ausübt und entsprechend über den zweiten Hebelarm (s.o.) eine bestimmte Anpresskraft F zwischen der Antriebsschnecke 22 und dem Schneckenrad 21 erzeugt, so dass die Antriebsschnecke 22 und das Schneckenrad 21 die Tendenz haben, in Eingriff miteinander zu bleiben.

Alternativ zu der Anordnung der Federelemente 6a, 6b kann das Hebelelement 5 selbst zumindest teilweise als elastisches Element, z.B. in Form einer Biegefeder, ausgeführt sein und sich ebenfalls an dem Gehäuse 24 des Überlagerungsantriebes 2 abstützen. In so einem Fall können am Gehäuse 24 zusätzlich einstellbare Festanschläge auf den unterschiedlichen Seiten des freien Endes 52 des Hebelelementes 5 vorgesehen sein. Die oben beschrieben Erzeugung einer bestimmten Anpresskraft F zwischen der Antriebsschnecke 22 und dem Schneckenrad 21 wird so ebenfalls ermöglicht.

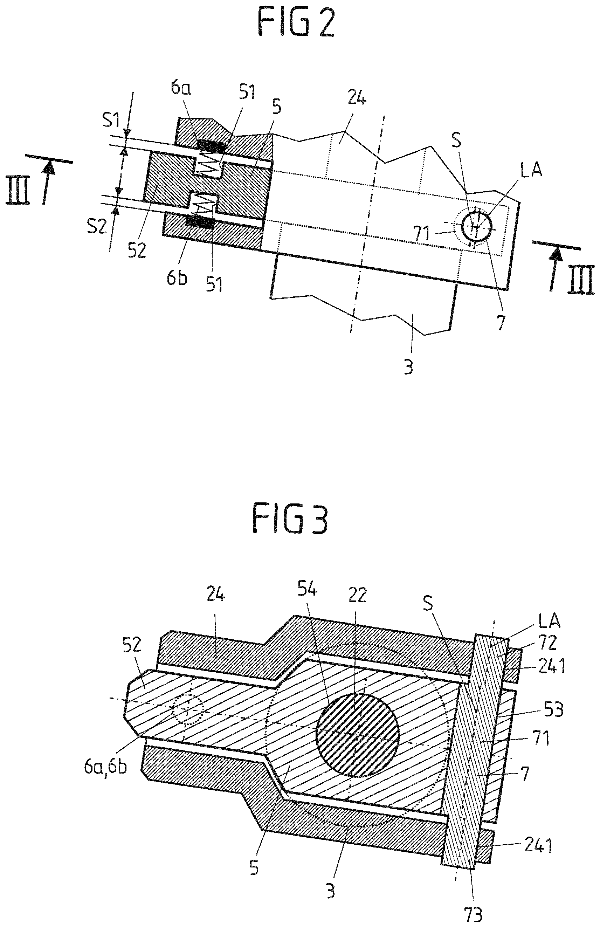

In Fig. 2 ist ein vergrößerter Ausschnitt des Überlagerungsantriebes der Fig. 1 im Bereich des Hebelelementes 5 dargestellt. Die Federelemente 6a, 6b sind hier zwar als Schraubenfedern darstellt; diese Darstellung hat jedoch lediglich symbolhaften Charakter. Jede andere Art eines Federelementes (z.B. eine Elastomerfeder oder eine Tellerfeder) ist zur Realisierung der Federelement 6a, 6b ebenfalls möglich. Darüber hinaus müssen die auf unterschiedlichen Seiten des Hebelelementes 5 angeordneten Federelemente 6a, 6b nicht identische ausgebildet sein. Möglich ist vielmehr auch, dass unterschiedliche Federelemente verwendet werden; z.B. Federelemente unterschiedlicher Art und/oder mit unterschiedlicher Kraft-Weg-Kennung.

In seiner in Fig. 2 gezeigten Ausgangsstellung (Überlagerungslenkung im Lenkrad und Fahrzeug montiert und nicht in Betrieb) weist das Hebelelement 5 (d.h. der erste Hebelarm der schwenkbaren Lagerung) beidseitig einen vorgegebenen Abstand S1, S2 zu dem jeweiligen Abschnitt des Gehäuses 24 auf, an dem sich die Federelemente 6a, 6b abstützen. So können am Ort E des Eingriffs (Fig. 1) von Antriebsschnecke 22 und Schneckenrad 21 über den zweiten Hebelarm (d.h. insbesondere über die Antriebsschnecke 22) sowohl in als auch gegen den Uhrzeigersinn (insbesondere in den mit der Antriebsschnecke 22 zusammenwirkenden Bereich des Schneckenrades 21 bzw. umgekehrt in den mit dem Schneckenrad 21 zusammenwirkenden Bereich der Antriebsschnecke 22) eingeleitete Kräfte ausgeglichen und durch die entsprechende Gegenkräfte ausübenden Federelemente 6a, 6b kompensiert werden. Die erwähnten eingeleiteten Kräfte variieren insbesondere während des Betriebes des Überlagerungsantriebes 2 durch sich in Abhängigkeit von den vorhandenen Betriebs- und Umgebungsbedingungen (Kräfte, Verschleiß, Temperatur, Luftfeuchtigkeit u.a.) ändernde Maße und Eingriffsverhältnisse. Erfolgt die Einleitung der Kräfte am zweiten Hebelarm im Uhrzeigersinn (d.h. das Hebelelement 5 wird auf das Schneckenrad 21 zu verschwenkt), wird das in Fig. 2 obere Federelement 6a zusammengedrückt. Wird das Hebelelement 5 umgekehrt von dem Schneckenrad 21 weg verschwenkt, wird das untere Federelement 6b zusammengedrückt.

Durch die Auswahl der Federelemente 6a, 6b sowie die konstruktive Gestaltung des Hebelelementes 5 und des Bereiches der Abstützung der Federelemente 6a, 6b am Gehäuse 24 des Überlagerungsantriebes 2 werden die Abstände S1, S2 zwischen dem freien Ende 52 des Halteelementes 5 und dem Gehäuse 24 jeweils festgelegt und somit eine Grundeinstellung des Halteelementes 5 definiert. In Abhängigkeit von bestehenden Anforderungen (insbesondere an das gewünschte Spiel zwischen Antriebsschnecke 22 und Schneckenrad 21) können die Abstände S1, S2 auch unterschiedlich gewählt werden.

Bei der Einleitung von Kräften am zweiten Hebelarm (insbesondere an der Antriebsschnecke 22), welche (insbesondere aufgrund der Verzahnungsgeometrie) das Bestreben haben, die Antriebsschnecke 22 vom Schneckenrad 21 wegzudrücken (d.h. bei einem Verschwenken des Hebelelementes im Uhrzeigersinn bezogen auf Fig. 1, 2, also auf das Schneckenrad 21 zu), kann das Spiel (der Abstand) zwischen den Zahnflanken der Verzahnung des Schneckenrades 21 und der Antriebsschnecke 22 ein kritisches Maß übersteigen. Um dies zu verhindern (d.h. um zu verhindern, dass die Verzahnungen des Schneckenrades 21 und der Antriebsschnecke 22 außer Eingriff geraten), ist der obere Abstand S1 so dimensioniert, dass das Hebelelement 5 (der erste Hebelarm) an dem dem oberen Federelement 6a zugeordneten abstützenden Bereich des Gehäuses 24 des Überlagerungsantriebes 2 zur Anlage kommt und somit einem Weiterschwenken des Hebelelementes 5 entgegengewirkt wird, bevor das Schneckenrad 21 und die Antriebsschnecke 22 außer Eingriff geraten.

Umgekehrt kann ein gegen den Uhrzeigersinn wirkendes Drehmoment (d.h. das Hebelelement 5 wird von dem Schneckenrad 21 weg verschwenkt) insbesondere durch entsprechende Auslegung des unteren Abstandes S2 und des unteren Federelementes 6b kompensiert werden. In diesem Zusammenhang wird auf einen weiteren Umstand hingewiesen: Wie aus Fig.1 ersichtlich ist, weist die Antriebsschnecke 22, vom Aktuator 3 aus gesehen hinter dem Bereich E des Eingriffes mit dem Schneckenrad 21, keine zusätzliche Lagerstelle auf. Gelagert wird die Antriebsschnecke 22 lediglich im Aktuator 3 über die Aktuatorwelle (Lagerung nicht dargestellt).

Aus diesem Grund kann die Antriebsschnecke 22 als weiteres Federelement ausgelegt werden (d.h. die Antriebsschnecke 22 ist zumindest abschnittsweise zumindest in einem gewissen Maße elastisch gestaltet), welches nach einem Kontakt des freien Endes 52 des Hebelelementes 5 mit dem Gehäuse 24 des Überlagerungsantriebes 2 innerhalb eines elastischen Bereiches auf Biegung beansprucht wird. Das Federelement 6a oder das Federelement 6b und die Antriebsschnecke 22 können bei dieser Auslegung der Antriebsschnecke 22 als zwei in Reihe geschaltete Federn betrachtet werden, wobei die Federkonstante der als Federelement ausgelegten Antriebsschnecke 22 insbesondere wesentlich höher ist als die der Federelemente 6a, 6b.

Die Federelemente 6a, 6b bewirken zumindest im Wesentlichen die im "normalen" Fahrbetrieb am Ort E des Eingriffs von Antriebsschnecke 22 und Schneckenrad 21 wirkenden Kräfte (Mindest- und Maximalanpresskraft). Bei Überschreitung dieser Kräfte in Extremsituationen (z.B. Einleitung schneller Drehrichtungswechsel am Lenkrad) wirkt die als weiteres Federelement ausgelegte Antriebsschnecke 22 als zusätzliche elastische Abstützung auf einem hohen Kraftniveau.

Zur Lagerung des Hebelelementes 5 im Gehäuse 24 des Überlagerungsantriebes 2 sind sowohl das Hebelelement 5 als auch das Gehäuse 24 mit Durchgangsbohrungen 53, 241 versehen, wobei ein als Exzenterstift 7 ausgebildetes Befestigungselement die Durchgangsbohrungen 53, 241 durchgreift. Mittels des Exzenterstift 7 erfolgt somit eine schwenkbare Lagerung des Hebelelementes 5 am Gehäuse 24 (vgl. auch Fig. 3, die einen Schnitt entlang der Ebene III-III in Fig. 2 darstellt).

Der Exzenterstift 7 weist einen mittleren Abschnitt 71 auf, der sich in der Durchgangsbohrung 53 des Hebelelementes 5 und somit im Innern des Gehäuses 24 erstreckt und der gegenüber einem oberen und einem unteren Abschnitt 72, 73 Exzenterstift 7 einen größeren Durchmesser besitzt. Die Mittelachse des mittleren Abschnitts 71 legt dabei die Schwenkachse S fest, um die der Aktuator 3 und die Antriebsschnecke 22 rotierbar sind, während die Mittelachsen des oberen und des unteren Abschnitts 72, 73 des Exzenterstifts 7, die die Durchgangsbohrungen 241 des Gehäuses 24 durchgreifen, eine Lagerachse LA definieren. Die Lagerachse LA und die Schwenkachse S verlaufen somit in einem Abstand zueinander, so dass sich bei einer Drehung des Exzenterstiftes 7 um die Lagerachse LA die Schwenkachse S auf einer Kreisbahn um die Lagerachse LA herum bewegt.

Denkbar ist, dass der Überlagerungsantrieb 2 eine (nicht dargestellte) Arretieranordnung aufweist, mit der der Exzenterstift 7 in einer gewünschten Ausgangswinkelstellung im Gehäuse 24 des Überlagerungsantriebes 2 arretiert werden kann. Somit ermöglicht der Exzenterstift 7 eine Voreinstellung des Eingriffes (der Eingriffsverhältnisse) zwischen der Antriebsschnecke 21 und dem Schneckenrad 22, d.h. insbesondere des Abstandes (des Spiels) zwischen diesen beiden Komponenten.

In Fig. 3 sind auch die Federelemente 6a, 6b, der Aktuator 3 sowie die Antriebsschnecke 22 (bzw. die Antriebswelle des Aktuators 3) angedeutet. Zu erkennen ist ebenfalls, dass das mit dem Aktuator 3 fest verbundene, bzw. als dessen Teil ausgebildete, Hebelelement 5 eine Durchgangsbohrung 54 aufweist, welche von der Antriebschnecke 22 bzw. von der Antriebswelle des Aktuators 3 durchgriffen wird.
Die Durchgangsbohrung 54 befindet sich in einem Abschnitt des Halteelementes 5, der gegenüber dem freien Ende 52 einen größeren Durchmesser oder (bei nicht rotationssymmetrischer Ausgestaltung des Halteelementes 5) zumindest eine in vertikaler Richtung (parallel zur Rotationsachse L des Schneckenrades) größere Ausdehnung aufweist. Das Hebelelement 5 ist z.B. als Teil des Aktuatorgehäuses 31 ausgebildet, so dass es gegenüber der Antriebswelle des Aktuators 3 und damit gegenüber der Antriebschnecke 22 festgelegt ist und ein Verschwenken des Hebelelementes 5 ein Verschwenken der Antriebschnecke 22 bewirkt.

Es wird darauf hingewiesen, dass die beschriebene Anordnung, bei der das Hebelelement 5 als erster Hebelarm und der zweite Hebelarm im Wesentlichen rechtwinklig zueinander verlaufen, lediglich beispielhaft zu verstehen ist. Die Erfindung kann vielmehr allgemein eine zweiseitige Hebelanordnung umfassen, wobei die Stellung der Hebelarme zueinander von untergeordneter Bedeutung ist und größtenteils von den herrschenden Einbaubedingungen abhängt. Denkbar ist beispielsweise auch eine Anordnung bei der Antriebsschnecke 22 und Hebelelement 5 in einer Flucht mit der Drehachse D der Antriebschnecke 22 verlaufen (also unter einem Winkel von 180° zueinander verlaufen), und bei der weiterhin die Schwenkachse S durch die Drehachse D verläuft.

### Bezugszeichenliste

- 1: Lenkrad
- 2: Überlagerungsantrieb
- 3: Aktuator
- 4: Arretierungseinrichtung
- 5: Halteelement
- 6a, 6b: Federelement
- 7: Exzenterstift
- 11: Lenkradnabe
- 21: Schneckenrad
- 22: Antriebsschnecke
- 23: Fortsatz
- 24: Gehäuse
- 31: Gehäuse Aktuator
- 41: Arretierbolzens
- 42: Aktuator Arretierungseinrichtung
- 43: Arretierscheibe
- 51: Aussparung
- 52: freies Ende
- 53: Durchgangsbohrung
- 54: Durchgangsbohrung
- 71: mittlerer Abschnitt Exzenterstift
- 72: oberer Abschnitt Exzenterstift
- 73: unterer Abschnitt Exzenterstift
- 221: freies Ende Antriebsschnecke
- 241: Durchgangsbohrung
- 431: Aussparung
- L: Drehachse Lenkwelle
- S: Schwenkachse
- E: Ort Eingriff Schneckenrad Antriebsschnecke
- D: Drehachse Antriebsschnecke
- LA: Lagerachse
- S1, S2: Abstand Halteelement Gehäuse

## Patentansprüche

1. Überlagerungsantrieb für eine Überlagerungslenkung eines Kraftfahrzeugs, mit
- einer Antriebswelle (22), die von einem Aktuator (3) angetrieben wird;
- einem mit der Antriebswelle (22) zusammenwirkenden Antriebsrad (21), wobei die Antriebswelle (22) gegenüber dem Antriebsrad (21) schwenkbar gelagert ist,
wobei ein gegenüber dem Antriebsrad (21) schwenkbar gelagertes Hebelelement (5), das so beschaffen und angeordnet ist, dass ein Verschwenken des Hebelelementes (5) ein Verschwenken der Antriebswelle (22) nach sich zieht oder umgekehrt ein Verschwenken der Antriebswelle (22) ein Verschwenken des Hebelelementes (5),
**dadurch gekennzeichnet,**
**dass** der Aktuator (3) und die Antriebswelle (22) eine Anordnung bilden, die zusammen gegenüber dem Antriebsrad (21) schwenkbar gelagert ist.

2. Überlagerungsantrieb nach Anspruch 1, **dadurch gekennzeichnet, dass** der Aktuator (3) mit der Antriebswelle (22) verbunden ist.

3. Überlagerungsantrieb nach einem der vorhergehenden Ansprüche, **dadurch gekennzeichnet, dass** die Antriebswelle (22) an einem Gehäuse (24) des Überlagerungsantriebes (2) schwenkbar gelagert ist.

4. Überlagerungsantrieb nach einem der vorhergehenden Ansprüche, **dadurch gekennzeichnet, dass** die Antriebswelle (22) gegenüber dem Antriebsrad (21) um eine Schwenkachse (S) schwenkbar gelagert ist, die zumindest näherungsweise parallel zur Rotationsachse (L) des Antriebsrades (21) und/oder senkrecht zur Achse (D) der Antriebswelle (22) verläuft.

5. Überlagerungsantrieb nach einem der vorhergehenden Ansprüche, **dadurch gekennzeichnet, dass** das Hebelelement (5) mit dem Aktuator (3) verbunden oder als Teil des Aktuators (3) ausgebildet ist.

6. Überlagerungsantrieb nach Anspruch 5, **dadurch gekennzeichnet, dass** das Hebelelement (5) mit einem Gehäuse (31) des Aktuators (3) verbunden ist.

7. Überlagerungsantrieb nach einem der vorhergehenden Ansprüche, **dadurch gekennzeichnet, dass** das Hebelelement (5) um eine Schwenkachse (S) schwenkbar gelagert ist, wobei das Hebelelement (5) einen ersten Hebelarm bildet und sich ein zweiter Hebelarm von der Schwenkachse (S) bis zu einem Ort (E), an dem die Antriebswelle (22) in das Antriebsrad (21) eingreift, erstreckt.

8. Überlagerungsantrieb nach einem der vorhergehenden Ansprüche, **dadurch gekennzeichnet, dass** sich das Hebelelement (5) über mindestens ein elastisches Element (6a, 6b) an einem Gehäuse (24) des Überlagerungsantriebes (2) oder an einem an dem Gehäuse (24) des Überlagerungsantriebes (2) festgelegten Bauteil abstützt.

9. Überlagerungsantrieb nach Anspruch 8, **gekennzeichnet durch** ein erstes und ein zweites elastisches Element (6a, 6b), wobei das erste elastische Element (6a) zwischen einer ersten Seite des Hebelelementes (5) und dem Gehäuse (24) oder dem an dem Gehäuse (24) festgelegten Bauteil angeordnet ist, und sich das zweite Element (6b) auf einer zweiten Seite des Hebelelementes (5), die der ersten Seite abgewandt ist, befindet.

10. Überlagerungsantrieb nach Anspruch 8 oder 9, **dadurch gekennzeichnet, dass** das Hebelelement (5) in einer Ausgangsstellung beabstandet von dem Gehäuse (24) des Überlagerungsantriebes (2) oder dem an dem Gehäuse (24) festgelegten Bauteil angeordnet ist.

11. Überlagerungsantrieb nach Anspruch 10, **dadurch gekennzeichnet, dass** das Gehäuse (24) des Überlagerungsantriebes (2) oder das mit dem Gehäuse (24) verbundene Bauteil eine Schwenkbewegung des Hebelelementes (5) begrenzt.

12. Überlagerungsantrieb nach einem der vorhergehenden Ansprüche, **dadurch gekennzeichnet, dass** das Hebelelement (5) über einen Stift schwenkbar an einem Gehäuse (24) des Überlagerungsantriebes (2) gelagert ist.

13. Überlagerungsantrieb nach Anspruch 12, **dadurch gekennzeichnet, dass** der Stift in Form eines Exzenterstiftes (7) ausgebildet ist, der mit einem ersten Abschnitt (71) das Halteelement und mit einem zweiten Abschnitt (72, 73) das Gehäuse (24) des Überlagerungsantriebes (2) durchgreift, wobei eine Mittelachse des ersten Abschnitts (71) die Schwenkachse (S) und eine Mittelachse des zweiten Abschnitts (72, 73) eine Lagerachse (LA) definieren, und wobei die Schwenkachse (S) in einem Abstand zu der Lagerachse (LA) verläuft.

14. Lenkrad mit einer Überlagerungslenkung, die einen Überlagerungsantrieb (2) gemäß einem der vorhergehenden Ansprüche aufweist.

## Claims

1. Superposition drive for a superimposed steering system of a motor vehicle, comprising
- a drive shaft (22) which is driven by an actuator (3);
- a drive gear (21) cooperating with the drive shaft (22), wherein the drive shaft (22) is pivotally mounted with respect to the drive gear (21),
wherein a lever element (5) pivotally mounted with respect to the drive gear (21), which is designed and arranged such that pivoting of the lever element (5) entails pivoting of the drive shaft (22), or vice versa pivoting of the drive shaft (22) entails pivoting of the lever element (5)
**characterized in that**
the actuator (3) and the drive shaft (22) form an arrangement which together is pivotally mounted with respect to the drive gear (21).

2. Superposition drive according to claim 1, **characterized in that** the actuator (3) is connected with the drive shaft (22).

3. Superposition drive according to any of the preceding claims, **characterized in that** the drive shaft (22) is pivotally mounted on a housing (24) of the superposition drive (2).

4. Superposition drive according to any of the preceding claims, **characterized in that** the drive shaft (22) is pivotally mounted with respect to the drive gear (21) about a pivot axis (S), which at least approximately extends parallel to the axis of rotation (L) of the drive gear (21) and/or vertically to the axis (D) of the drive shaft (22).

5. Superposition drive according to any of the preceding claims, **characterized in that** the lever element (5) is connected with the actuator (3) or formed as part of the actuator (3).

6. Superposition drive according to claim 5, **characterized in that** the lever element (5) is connected with a housing (31) of the actuator (3).

7. Superposition drive according to any of the preceding claims, **characterized in that** the lever element (5) is pivotally mounted about a pivot axis (S), wherein the lever element (5) forms a first lever arm and a second lever arm extends from the pivot axis (S) up to a point (E) at which the drive shaft (22) engages into the drive gear (21).

8. Superposition drive according to any of the preceding claims, **characterized in that** the lever element (5) supports on a housing (24) of the superposition drive (2) via at least one elastic element (6a, 6b) or on a component fixed at the housing (24) of the superposition drive (2).

9. Superposition drive according to claim 8, **characterized by** a first and a second elastic element (6a, 6b), wherein the first elastic element (6a) is arranged between a first side of the lever element (5) and the housing (24) or the component fixed at the housing (24), and the second element (6b) is located on a second side of the lever element (5), which faces away from the first side.

10. Superposition drive according to claim 8 or 9, **characterized in that** in a starting position the lever element (5) is arranged at a distance from the housing (24) of the superposition drive (2) or the component fixed at the housing (24).

11. Superposition drive according to claim 10, **characterized in that** the housing (24) of the superposition drive (2) or the component connected with the housing (24) limits a swivel movement of the lever element (5).

12. Superposition drive according to any of the preceding claims, **characterized in that** the lever element (5) is pivotally mounted on a housing (24) of the superposition drive (2) via a pin.

13. Superposition drive according to claim 12, **characterized in that** the pin is formed in the form of an eccentric pin (7) which with a first portion (71) reaches through the holding element and with a second portion (72, 73) reaches through the housing (24) of the superposition drive (2), wherein a middle axis of the first portion (71) defines the pivot axis (S) and a middle axis of the second portion (72, 73) defines a bearing axis (LA), and wherein the pivot axis (S) extends at a distance to the bearing axis LA).

14. Steering wheel with a superimposed steering system, which includes a superposition drive (2) according to any of the preceding claims.

## Revendications

1. Entraînement à superposition pour une direction à superposition d'un véhicule automobile, comprenant :
- un arbre d'entraînement (22) qui est entraîné par un actionneur (3) ;
- une roue d'entraînement (21) coopérant avec l'arbre d'entraînement (22), l'arbre d'entraînement (22) étant supporté de manière pivotante par rapport à la roue d'entraînement (21),
un élément de levier (5) supporté de manière pivotante par rapport à la roue d'entraînement (21), lequel est réalisé et disposé de telle sorte qu'un pivotement de l'élément de levier (5) provoque un pivotement de l'arbre d'entraînement (22) ou inversement, qu'un pivotement de l'arbre d'entraînement (22) provoque un pivotement de l'élément de levier (5),
**caractérisé en ce que**
l'actionneur (3) et l'arbre d'entraînement (22) forment un agencement qui est supporté dans son ensemble de manière pivotante par rapport à la roue d'entraînement (21).

2. Entraînement à superposition selon la revendication 1, **caractérisé en ce que** l'actionneur (3) est connecté à l'arbre d'entraînement (22).

3. Entraînement à superposition selon l'une quelconque des revendications précédentes, **caractérisé en ce que** l'arbre d'entraînement (22) est supporté de manière pivotante au niveau d'un boîtier (24) de l'entraînement à superposition (2).

4. Entraînement à superposition selon l'une quelconque des revendications précédentes, **caractérisé en ce que** l'arbre d'entraînement (22) est supporté par rapport à la roue d'entraînement (21) de manière à pouvoir pivoter autour d'un axe de pivotement (S) qui s'étend au moins approximativement parallèlement à l'axe de rotation (L) de la roue d'entraînement (21) et/ou perpendiculairement à l'axe (D) de l'arbre d'entraînement (22).

5. Entraînement à superposition selon l'une quelconque des revendications précédentes, **caractérisé en ce que** l'élément de levier (5) est connecté à l'actionneur (3) ou est réalisé en tant que partie de l'actionneur (3).

6. Entraînement à superposition selon la revendication 5, **caractérisé en ce que** l'élément de levier (5) est connecté à un boîtier (31) de l'actionneur (3).

7. Entraînement à superposition selon l'une quelconque des revendications précédentes, **caractérisé en ce que** l'élément de levier (5) est supporté de manière à pouvoir pivoter autour d'un axe de pivotement (S), l'élément de levier (5) formant un premier bras de levier et un deuxième bras de levier s'étendant depuis l'axe de pivotement (S) jusqu'à un emplacement (E) au niveau duquel l'arbre d'entraînement (22) s'engage dans la roue d'entraînement (21).

8. Entraînement à superposition selon l'une quelconque des revendications précédentes, **caractérisé en ce que** l'élément de levier (5) s'appuie par le biais d'au moins un élément élastique (6a, 6b) contre un boîtier (24) de l'entraînement à superposition (2) ou contre un composant fixé au boîtier (24) de l'entraînement à superposition (2).

9. Entraînement à superposition selon la revendication 8, **caractérisé par** un premier et un deuxième élément élastique (6a, 6b), le premier élément élastique (6a) étant disposé entre un premier côté de l'élément de levier (5) et le boîtier (24) ou le composant fixé au boîtier (24), et le deuxième élément (6b) se trouvant sur un deuxième côté de l'élément de levier (5) qui est opposé au premier côté.

10. Entraînement à superposition selon la revendication 8 ou 9, **caractérisé en ce que** l'élément de levier (5) est disposé dans une position de départ à distance du boîtier (24) de l'entraînement à superposition (2) ou du composant fixé au boîtier (24).

11. Entraînement à superposition selon la revendication 10, **caractérisé en ce que** le boîtier (24) de l'entraînement à superposition (2) ou le composant connecté au boîtier (24) limite un mouvement de pivotement de l'élément de levier (5).

12. Entraînement à superposition selon l'une quelconque des revendications précédentes, **caractérisé en ce que** l'élément de levier (5) est supporté par le biais d'une goupille de manière à pouvoir pivoter au niveau d'un boîtier (24) de l'entraînement à superposition (2).

13. Entraînement à superposition selon la revendication 12, **caractérisé en ce que** la goupille est réalisée en forme d'une goupille excentrique (7) qui vient en prise par une première portion (71) à travers l'élément de fixation et par une deuxième portion (72, 73) à travers le boîtier (24) de l'entraînement à superposition (2), un axe médian de la première portion (71) définissant l'axe de pivotement (S) et un axe médian de la deuxième portion (72, 73) définissant un axe de palier (LA), et l'axe de pivotement (S) s'étendant à distance de l'axe de palier (LA).

14. Volant de direction avec une direction à superposition, qui présente un entraînement à superposition (2) selon l'une quelconque des revendications précédentes.
